# FASCICULE DE BREVET EUROPEEN

(11) **EP 1 246 536 B1**
(45) Date de publication et mention de la délivrance du brevet: **08.10.2003**
(21) Numéro de dépôt: 01903896.7
(22) Date de dépôt: 09.01.2001
(51) Int. Cl.: A21D 13/00, A23L 1/10

(54) **UTILISATION D'UN PRODUIT CEREALIER POUR AMELIORER LES PERFOMANCES COGNITIVES ET LE BIEN-ETRE MENTAL CHEZ L'HOMME ET EN PARTICULIER CHEZ L'ENFANT ET L' ADOLESCENT**
VERWENDUNG EINES GETREIDEPRODUKTS ZUR VERBESSERUNG DER KOGNITIVEN FUNKTIONEN UND DES PSYCHISCHEN WOHLBEFINDES BEI MENSCHEN, INSBESONDERE BEI KINDERN UND JUGENDLICHEN
USE OF A CEREAL PRODUCT FOR IMPROVING COGNITIVE PERFORMANCE AND MENTAL WELL-BEING IN A PERSON, PARTICULARLY IN A CHILD AND AN ADOLESCENT

(30) Priorité: 10.01.2000 FR 0000303
(43) Date de publication de la demande: 09.10.2002
(73) Titulaire: LU FRANCE en abrégé LF SA, 91130 Ris Orangis (FR)
(72) Inventeur: LANG, Vincent, F-94700 Maisons-Alfort (FR); DEGOUY, Magali, F-78220 Viroflay (FR); CHAMPENOIS, Yann, 91600 Savigny-sur-orge (FR)
(74) Mandataire: Warcoin, Jacques
(86) Numéro de dépôt international: FR0100055
(87) Numéro de publication internationale: WO01050870

(56) Documents cités:
- DATABASE WPI Week 199804 Derwent Publications Ltd., London, GB; AN 1998-033230 XP002148946 & CN 1 135 288 A (G. WEI), 13 novembre 1996 (1996-11-13)
- DATABASE WPI Week 199732 Derwent Publications Ltd., London, GB; AN 1997-342614 XP002148947 & CN 1 107 655 A (S. LI), 6 septembre 1995 (1995-09-06)
- SUSAN W. ROSS ET AL.: "Glycemic index of processed wheat products" AMERICAN JOURNAL OF CLINICAL NUTRITION, vol. 46, no. 4, 1987, pages 631-635, XP000951452
- DONNA L. KOROL ET AL.: "Glucose, memory and aging" AMERICAN JOURNAL OF CLINICAL NUTRITION, vol. 67suppl., no. 4, 1998, pages 764s-771s, XP000951458
- DAVID J. A. JENKINS ET AL.: "Glycemic index of foods: a physiological basis for carbohydrate exchange" AMERICAN JOURNAL OF CLINICAL NUTRITION, vol. 34, no. 3, 1981, pages 362-366, XP000951451
- HANS ENGLYST ET AL.: "Measurement of rapidly available glucose (RAG) in plant foods..." BRITISH JOURNAL OF NUTRITION, vol. 75, no. 3, 1996, pages 327-337, XP000951454 cité dans la demande

## Description

La présente invention concerne l'utilisation de produits céréaliers ayant une teneur en amidon lentement digestible par rapport la teneur totale en amidon supérieure à 12%, de préférence supérieure à 20%, et une teneur en lipides comprise entre 3 et 25 g pour 100 g de matière sèche, pour améliorer, à des fins non thérapeutiques, les performances cognitives.

L'apprentissage est une des composantes essentielles du comportement humain, parce qu'il en permet les modifications durables, améliorant par là le fonctionnement de l'individu. L'apprentissage implique de nombreuses fonctions telles que l'acquisition de connaissance, la mémorisation, la restitution et l'analyse des informations. Les mécanismes de l'apprentissage sont encore mal connus.

Le cerveau est un organe jouant un rôle essentiel dans l'apprentissage, en relation avec tous les autres organes de l'individu. Les recherches des quelques dernières décennies ont montré que la fourniture énergétique et le statut minéral et vitaminique de l'individu ont une influence sur l'expression et l'accomplissement de ses apprentissages.

Nos sociétés actuelles ont en commun certains grands traits d'organisation. L'un d'eux, bien que non applicable dans toutes les sociétés du monde, est l'apprentissage scolaire. Celui-ci est réalisé au cours de différentes périodes au cours de la journée. Pour les enfants, la période matinale est souvent riche en apprentissages divers et variés. Au cours de la matinée, de nombreux efforts d'attention, de concentration, de mémorisation, de restitution des connaissances sont demandés aux enfants.

Une telle demande est aussi valable pour les adultes qui, eux aussi, accomplissent de nombreuses activités physiques et intellectuelles, au travail ou dans leurs loisirs.

C'est pour cette raison qu'il est tant recommandé de consommer un petit déjeuner afin de reconstituer les réserves énergétiques après la nuit de jeûne, et pour approvisionner l'organisme en énergie pour ses activités de la matinée. Ceci est particulièrement vrai pour les enfants, chez lesquels le renouvellement énergétique est très important.

Afin de reconstituer ces réserves énergétiques, il est en général proposé un petit déjeuner dit « équilibré » composé en général de quatre types produits :
- un produit céréalier (pains, biscottes, viennoiseries, céréales pour petit déjeuner ou biscuits),
- un produit laitier,
- un fruit ou jus de fruit
- et une boisson.

L'équilibre de ce type de petit déjeuner est obtenu en proposant un pourcentage adapté et une quantité suffisante de lipides, glucides et protéines. Ce type d'apport permet effectivement de reconstituer les réserves mais n'assure pas forcément l'amélioration des fonctions intellectuelles notamment cognitives comme cela a été dit précédemment. Or les recherches de la demanderesse ont démontré que certaines formes d'aliments prises notamment au petit déjeuner permettaient d'améliorer les fonctions intellectuelles notamment chez les enfants et les adolescents.

Les abrégés de CN 1 135288 et de CN 1 107655 mentionnent des biscuits contenant différents extraits de plantes et qui auraient des effets bénéfiques sur la santé, notamment en améliorant l'immunité, les fonctions du cerveau et la vision.

Ross et al (Am J Clin Nut, 1987) décrivent les index glycémique et insulinémique de différents produits céréaliers ; les index les plus bas sont observés, dans le cas des biscuits, pour des teneurs en matière grasse élévées.

Korol et al (Am J Clin Nut, 1998) ont indiqué que le taux de glucose circulant influence certaines fonctions cognitives, et peut notamment améliorer les troubles de la mémoire des personnes âgées.

Cependant, d'autres études ont conclu que le glucose n'avait pas de rôle dans ces processus.

Jenkins et al (Am J Clin Nut, 1981) ont montré que l'augmentation du glucose sanguin dépend fortement de la nature de la source glucidique ingérée.

Englyst et al (British Journal of Nutrition, 1996) ont mesuré le niveau de digestion de l'amidon *in vitro* à l'aide d'une méthode permettant de classer l'amidon en trois catégories : l'amidon rapidement digestible, l'amidon lentement digestible et l'amidon résistant.

De manière inattendue, les demandeurs ont montré que la régulation de l'index glycémique, seule, était insuffisante pour augmenter ces performances. Les demandeurs ont maintenant mis en évidence que certains produits céréaliers améliorent de façon significative les performances cognitives, grâce au choix de proportions appropriées entre l'amidon lentement digestible et l'amidon total présent dans le produit. Ces produits présentent également des taux de lipides modérés.

En outre, la modulation du rapport entre l'amidon lentement digestible et l'amidon total (qui induit en parallèle des variations de la teneur en glucose lentement disponible par rapport à la teneur totale en glucides) permet d'obtenir des produits céréaliers ayant un index glycémique plus faible, à composition équivalente par ailleurs, et notamment à teneur en matière grasse équivalente. Ainsi, un produit ayant un taux de lipides de 17g / 100 g et une teneur en glucose lentement disponible > 15% a un index glycémique de 45. Un produit ayant un taux de lipides de 9g / 100g et une teneur en glucose lentement disponible > 15% a un index glycémique de 59. A l'opposé, un produit ayant un taux de lipides de 12g / 100g et une teneur en glucose lentement disponible < 7% a un index glycémique de 70.

C'est pourquoi la présente invention a pour objet l'utilisation de produits céréaliers en particulier de biscuits ou de crackers, ayant une teneur en amidon lentement digestible par rapport à la teneur totale en amidon supérieure à environ 12% en poids, de préférence supérieure à environ 20%, et une teneur en lipides comprise entre 3 et 25 g pour 100 g de matière sèche, pour améliorer les performances cognitives, en particulier la mémorisation, l'attention, la concentration et/ou la vigilance chez l'homme et en particulier chez l'enfant et l'adolescent.

Ainsi, dans le cadre de l'invention, l'on utilise des produits céréaliers, en particulier des biscuits ou des crackers, pour favoriser l'attention, la concentration, la vigilance et la mémorisation chez l'homme et en particulier chez l'enfant et l'adolescent, caractérisés en ce qu'ils présentent une teneur en amidon lentement digestible par rapport à la teneur totale en amidon supérieure à environ 12% et de préférence supérieure à environ 20 %, et une teneur en lipides comprise entre 3 et 25 g pour 100 g de matière sèche.

La teneur préférée en amidon des produits céréaliers utilisables selon l'invention est de 30 à 70 g pour 100 g de matière sèche, en particulier de 34 à 60 g pour 100 g de matière sèche.

De préférence les produits céréaliers utilisables selon l'invention ont une teneur en glucose lentement disponible par rapport à la teneur totale en glucides supérieure à environ 10%, de façon encore préférée supérieure à environ 15%.

La teneur préférée en glucides des produits céréaliers utilisables selon l'invention est de 60 à 90 g pour 100 g de matière sèche.

La teneur en sucre des produits céréaliers utilisables selon l'invention est de préférence de 2 à 40 g pour 100 g de matière sèche. Le sucre peut être un monosaccharide et/ou un disaccharide et en particulier du glucose, du saccharose, du fructose et/ou du maltose.

Les teneurs en humidité des produits céréaliers selon l'invention pourront varier, et notamment de l'ordre de 7 à 10 % en poids. Cependant, des produits particulièrement adaptés à la mise en oeuvre de l'invention comprennent des taux d'humidité inférieurs à 5 %, en particulier de l'ordre de 3 à 4 %.

Les produits céréaliers utilisables selon l'invention présentent une teneur modérée en lipides. En effet il est couramment admis qu'un taux important de lipides influe sur la vitesse de digestion des glucides en la ralentissant via un effet sur la vidange gastrique. Or, on a pu mettre en évidence que des taux modérés de lipides permettaient néanmoins d'obtenir les améliorations souhaitées dans le cadre de la présente invention, ce qui présente l'avantage d'éviter les surcharges lipidiques. Ainsi, la teneur en lipide des produits céréaliers utilisables selon l'invention est de 3 à 25 g pour 100 g de matière sèche, de préférence de 10 à 20 g pour 100 g de matière sèche, et de manière encore préférée de 14 à 20 g pour 100 g de matière sèche.

En particulier, des produits céréaliers préparés selon la présente invention et présentant des taux de lipides inférieurs à 15 g pour 100 g de matière sèche notamment de l'ordre de 12 g pour 100 g et des apports équilibrés en amidon par rapport aux glucides permettent d'améliorer les différents aspects des performances cognitives.

De façon surprenante, la teneur en protéines des produits céréaliers utilisables selon l'invention est faible, de préférence 5 à 11 g pour 100 g de matière sèche. En effet ceci est contraire à une étude comparative menée chez des adultes concernant les effets des repas riches en protéines par rapport aux repas riches en glucides et préconisant l'utilisation des protéines pour améliorer l'attention (Spring et al., « effects of protein and carbohydrate meals on mood and performance : interactions with sex and ages », J. Psychiat. Res, 1982, vol. 17, 2, 155-167).

Bien que les produits céréaliers selon l'invention permettent une amélioration des performances cognitives de façon générale quel que soit le moment auquel ils sont consommés, les performances cognitives sont plus particulièrement améliorées lorsque les produits céréaliers utilisables selon l'invention sont consommés au petit déjeuner.

En outre, l'ingestion de produits céréaliers renfermant des teneurs en amidon lentement digestible selon l'invention permet de maintenir les performances cognitives, et notamment les capacités d'apprentissage et de mémorisation, même lorsque l'organisme est soumis à des conditions d'épuisement des réserves énergétiques.

L'objet de la présente invention peut avantageusement être mis en oeuvre dans le cadre d'un procédé non thérapeutique pour favoriser l'attention, la concentration, la vigilance et/ou la mémorisation chez l'homme et en particulier chez l'enfant et l'adolescent, caractérisé en ce qu'il implique la consommation, de préférence au petit déjeuner, de produits céréaliers, en particulier de biscuits ou de crackers selon l'invention.

Le terme «produit céréalier» dans la présente invention représente une préparation constituée majoritairement de farine, matières grasses, eau et matières sucrantes pour les produits sucrés.

On considère généralement l'amidon comme étant digéré lentement.

Toutefois, la vitesse et le degré auxquels l'amidon est digéré et absorbé peut varier considérablement selon la source d'amidon et de la technologie alimentaire qui lui est appliquée lors de la fabrication de l'aliment.

La teneur en amidon lentement digestible des produits céréaliers utilisables selon l'invention peut donc être due à la fois à leur source d'amidon mais aussi à la technologie de formage utilisée pour les fabriquer. La teneur en glucose lentement disponible reflète la vitesse à laquelle le glucose provenant du sucre et de l'amidon devient disponible pour l'absorption dans l'intestin grêle humain.

La teneur en amidon lentement digestible par rapport à la teneur totale en amidon et la teneur en glucose lentement disponible par rapport à la teneur totale en glucides des produits céréaliers utilisables selon la présente invention sont mesurées grâce à la méthode de Englyst (Englyst HN, Veenstra J., Hudson GJ., 1996, Measurement of rapidly available glucose (RAG) in plant fonds : a potential in vitro predictor of the glycaemic response, *British Journal of Nutrition, 75,* 327-337 (voir supra), et Englyst KN., Englyst HN., Hudson GJ., Cole TJ., Cummings JH., 1999, Rapidly available glucose in fonds : a measurement that reflects the glycemic response, *Am* *J Clin Nutr,* 69, 448-454). Cette méthode permet de classifier les aliments en fonction de la biodisponibilité in vitro de leur amidon et de la digestibilité de l'ensemble des glucides disponibles. Le classement de certains aliments sont présentés dans le Tableau 1 suivant.

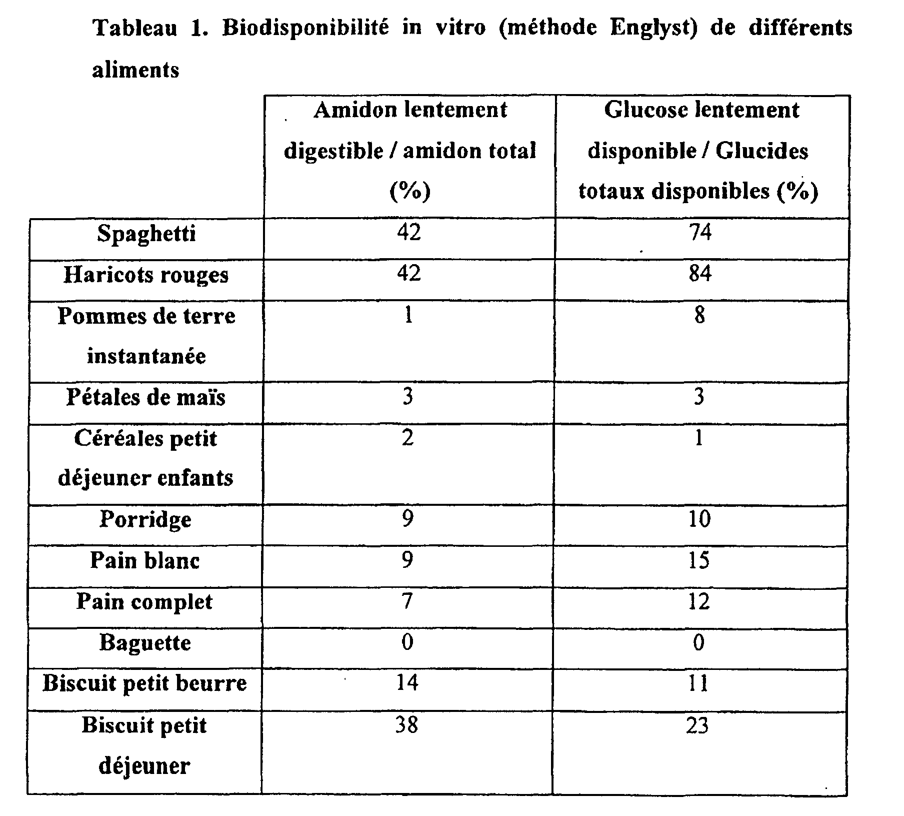

Les produits céréaliers utilisables selon l'invention présentent en outre de préférence un index glycémique particulièrement bas, en particulier inférieur à 60, de préférence inférieur à 50 et de façon encore plus préférée inférieure à 45.

Les produits céréaliers utilisables selon l'invention sont de préférence obtenus par des technologies de formage connues de l'homme du métier telles que les pâtes laminées, laminées feuilletées, et découpées, ou par des pâtes rotatives ou coupe fil.

Des exemples de procédés utilisés pour obtenir les produits céréaliers utilisables selon l'invention sont les suivants :

### 1. Procédé céréalier des pâtes sucrées

Les matières premières majoritaires sont la farine, les matières sucrantes, les matières grasses. Elles sont mélangées à d'autres ingrédients type eau, sel, poudres levantes ... dans un pétrin. Cette étape est appelée pétrissage. La consistance de cette pâte détermine son passage sur la ligne de fabrication.

Si cette pâte est liée (réseau assuré par les protéines), et forme un bloc de pâte, après un temps de repos variable, elle va être façonnée par des cylindres de laminage de manière à faire un ruban de pâte de 1 à 2 mm. Elle sera ensuite découpée, par un cylindre roto découpoir, à la forme et aux dimensions de biscuits voulues. On obtient donc des pâtes laminées et découpées.

Si cette pâte n'a pas de cohésion et ressemble à du sable, elle sera moulée aux formes et dimensions du biscuit voulues et démoulée par une rotative. Ce sont des pâtes rotatives.

Si cette pâte n'a pas de cohésion, elle est collante, elle sera dressée dans un coupe fil qui découpera des morceaux de pâte. Ce sont des pâtes coupe fil.

Ces pâtes peuvent être ensuite dorées, puis seront cuites dans un four. Sortis du four, les biscuits seront refroidis avant leur conditionnement.

### 2. Procédé céréalier des pâtes neutres ou salées

Les matières premières majoritaires sont la farine, l'eau, un ingrédient actif suivant les procédés (enzyme ou levure ou agent levant).

Ces ingrédients sont mélangés, en partie (cracker fermenté) ou en totalité. Ils sont mis à fermenter pendant un temps variable de 1 à 24 heures, à température ambiante, ou chaude suivant le procédé. La pâte est laminée, et éventuellement feuilletée puis découpée par un roto découpoir aux dimensions du cracker souhaité. Les crackers sont ensuite cuits, et pulvérisés éventuellement de matière grasse et aromatisés, puis ensuite refroidis et conditionnés. Ce sont des pâtes laminées, ou laminées feuilletées, et découpées.

L'invention va être illustrée par les exemples qui suivent, qui rapportent des études au cours desquelles des composantes des performances cognitives ont été testées sur un modèle animal, extrapolable à l'homme.

Dans l'exemple 1, on se réfère aux figures suivantes :
· La figure 1 représente les différents types de procédés de fabrication de produits céréaliers selon l'invention.
· La figure 2 représente la discrimination entre le levier actif et le levier inactif 2 heures et 15 minutes après la consommation du petit déjeuner et après 20 minutes d'apprentissage (Jour 1 après familiarisation) en fonction du type de petit déjeuner consommé.
· La figure 3 représente la discrimination entre le levier actif et le levier inactif 2 heures et 15 minutes après la consommation du petit déjeuner et après 20 minutes d'apprentissage (Jour 21 de la familiarisation) en fonction du type de petit déjeuner consommé.

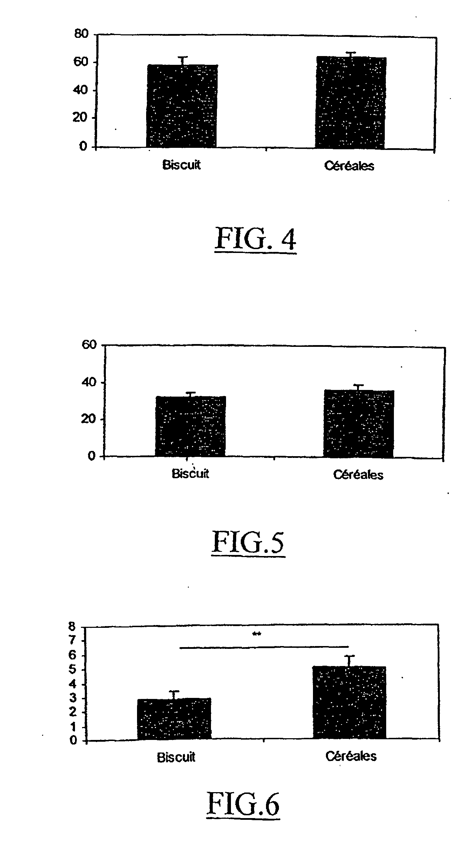

· La figure 4 représente le nombre de cases périphériques parcourues pendant les 3 minutes du test et 2 heures et 15 minutes après la consommation du petit déjeuner le jour 1 de la familiarisation en fonction du type de petit déjeuner consommé.
· La figure 5 représente le nombre de redressement pendant les 3 minutes du test et 2 heures et 15 minutes après la consommation du petit déjeuner le jour 1 de la familiarisation en fonction du type de petit déjeuner consommé.
· La figure 6 représente le nombre d'entrées dans la case centrale pendant les 3 minutes du test et 2 heures et 15 minutes après la consommation du petit déjeuner le jour 1 de la familiarisation en fonction du type de petit déjeuner consommé.

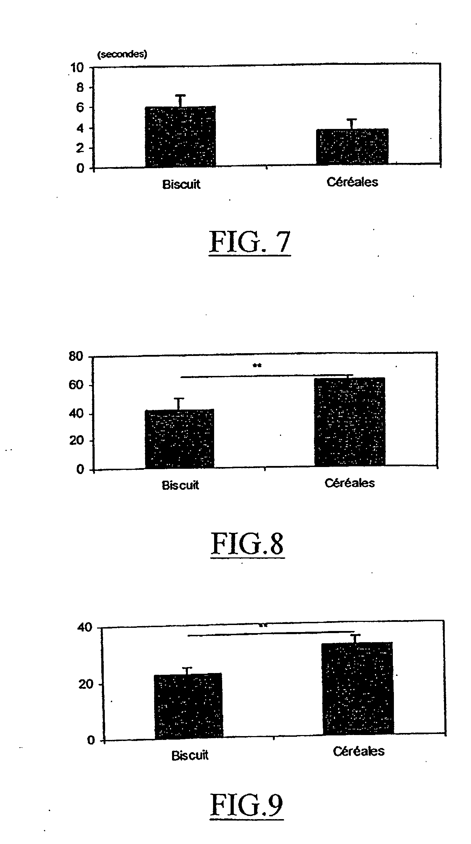

· La figure 7 représente la durée d'immobilité pendant les 3 minutes du test et 2 heures et 15 minutes après la consommation du petit déjeuner le jour 1 de la familiarisation en fonction du type de petit déjeuner consommé.
· La figure 8 représente le nombre de cases périphériques parcourues pendant les 3 minutes du test et 2 heures et 15 minutes après la consommation du petit déjeuner le jour 21 de la familiarisation en fonction du type de petit déjeuner consommé.
· La figure 9 représente le nombre de redressement pendant les 3 minutes du test et 2 heures et 15 minutes après la consommation du petit déjeuner le jour 21 de la familiarisation en fonction du type de petit déjeuner consommé.

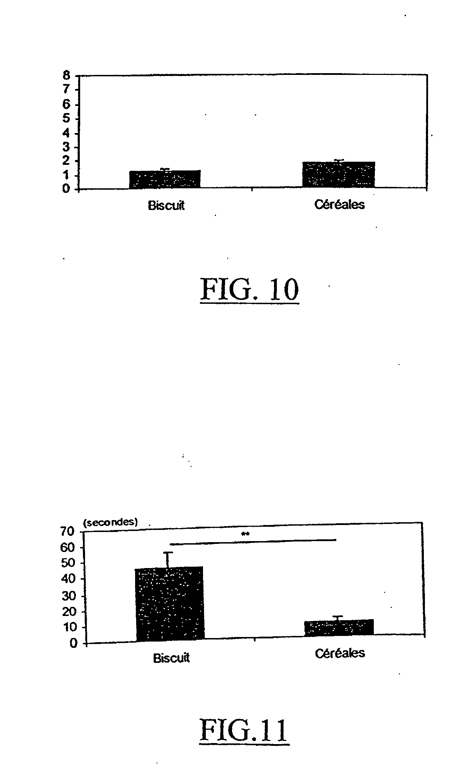

· La figure 10 représente le nombre d'entrées dans la case centrale pendant les 3 minutes du test et 2 heures et 15 minutes après la consommation du petit déjeuner le jour 21 de la familiarisation en fonction du type de petit déjeuner consommé,
· La figure 11 représente la durée d'immobilité pendant les 3 minutes du test et 2 heures et 15 minutes après la consommation du petit déjeuner le jour 21 de la familiarisation en fonction du type de petit déjeuner consommé.

### Exemple 1: Etude sur les performances cognitives de produits céréaliers selon l'invention

Pour examiner les effets des produits céréaliers utilisables selon l'invention sur les performances cognitives, l'apprentissage dans les heures qui suivent la consommation d'un petit déjeuner composé soit de biscuits selon la présente invention, soit de céréales prêtes à consommer du commerce a été évalué.

La composition nutritionnelle des deux produits est relativement comparable comme en atteste le Tableau 2. Les teneurs en Mg et Vit C, nutriments éventuellement impliqués dans le tonus de l'animal, sont également comparables.

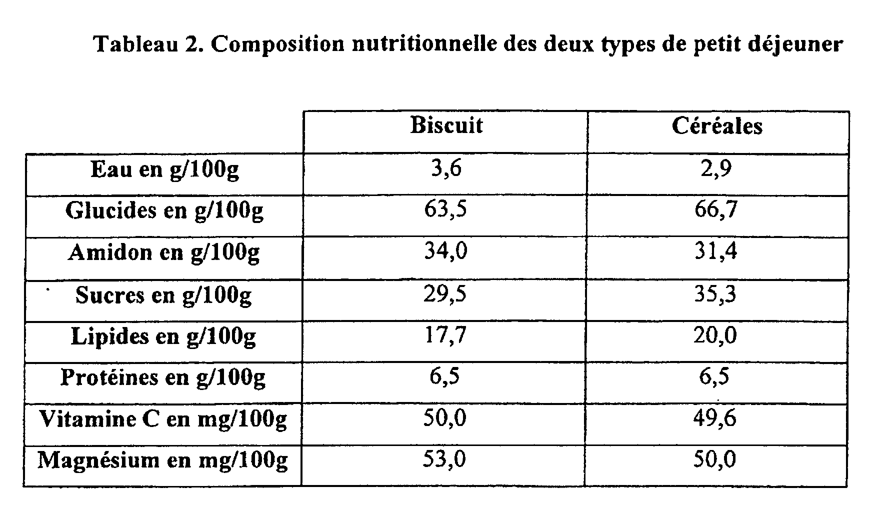

Ces deux aliments céréaliers sont fabriqués à partir d'ingrédients similaires (farine, sucre, matière grasse...) dans des proportions similaires.

La biodisponibilité de l'amidon des deux aliments a été mesurée grâce à la méthode de Englyst. Les résultats de ces mesures, sont présentés dans le Tableau 3 suivant.

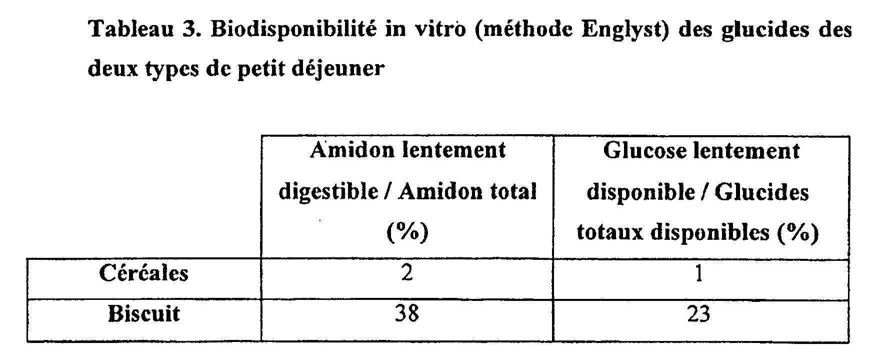

Deux groupes de 24 rats ont été habitués à la consommation d'un petit déjeuner représentant 25% de leurs besoins énergétiques et composé de l'un des deux produits, suivi d'une période de jeûne de 2 heures 30 minutes. Ce jeûne est suivi d'un accès libre à la nourriture permettant aux animaux de se nourrir pour le reste de la journée. Ceci a permis de reproduire les habitudes de consommation pratiquées par les hommes. Après une dizaine de jours de familiarisation, les rats ont été soumis à des tests d'apprentissage et à des mesures de leur activité locomotrice, à un moment correspondant à 2 heures 15 minutes après leur petit déjeuner. Cette période critique est souvent décrite comme correspondant à des moments de baisses de l'attention et de «coup de pompe ».

Le test d'apprentissage consiste à placer les animaux dans un local éclairé présentant deux leviers (l'un, actif, éteint la lumière ; l'autre, inactif, est sans effet). Après l'appui sur le levier actif, la lumière s'éteint pendant 30 secondes, puis s'allume à nouveau. Le rat, préférant spontanément être dans l'obscurité, apprend donc progressivement, en appuyant plus souvent sur le levier actif que sur le levier inactif. Pour la mesure de l'activité locomotrice, l'animal est placé pendant 3 minutes dans un local aménagé, comprenant au sol une subdivision en 9 cases, permettant de quantifier ses activités locomotrices sur la base de plusieurs critères :
- nombre de cases périphériques parcourues
- nombre de redressements
- nombre d'entrées dans la case centrale
- durée d'immobilité (variable déduite des 3 précédentes).

Ainsi, l'apprentissage et l'activité locomotrice ont pu être évalués dans la période qui suit la consommation d'un petit déjeuner composé de deux types d'aliments glucidiques : céréales pour petit déjeuner et biscuits. Le but est de vérifier que le biscuit, aliment glucidique peu connu, conduit aux mêmes résultats que les céréales pour petit déjeuner, aliment glucidique bien connu. Cette comparaison a été effectuée en aigu (au jour 1 après la familiarisation) et après 3 semaines de régime "petit déjeuner" avec l'un des deux produits (au jour 21 après la familiarisation).

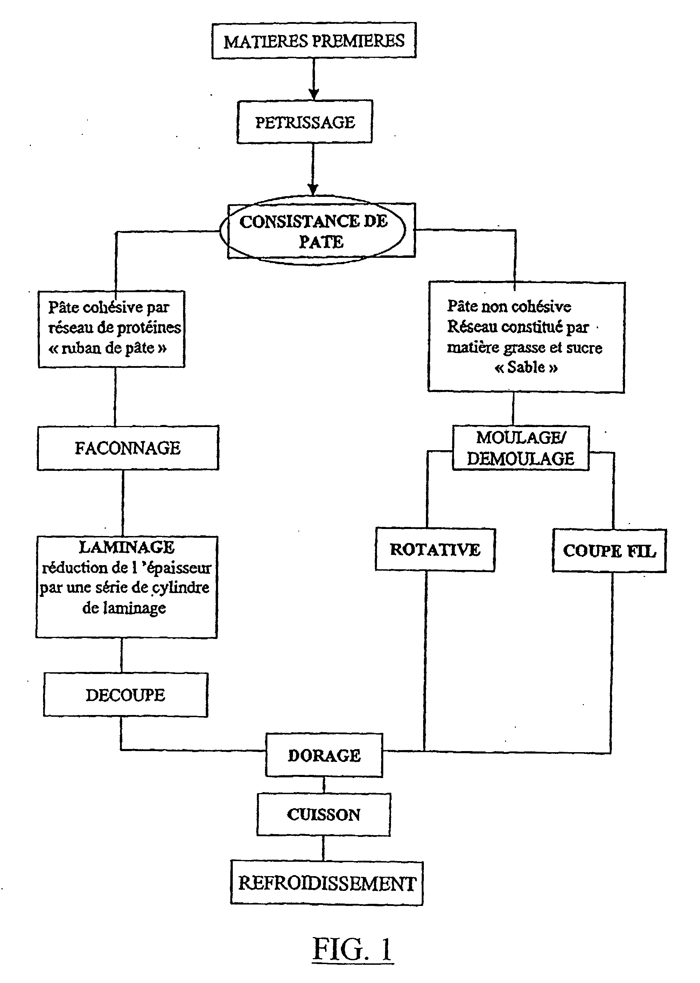

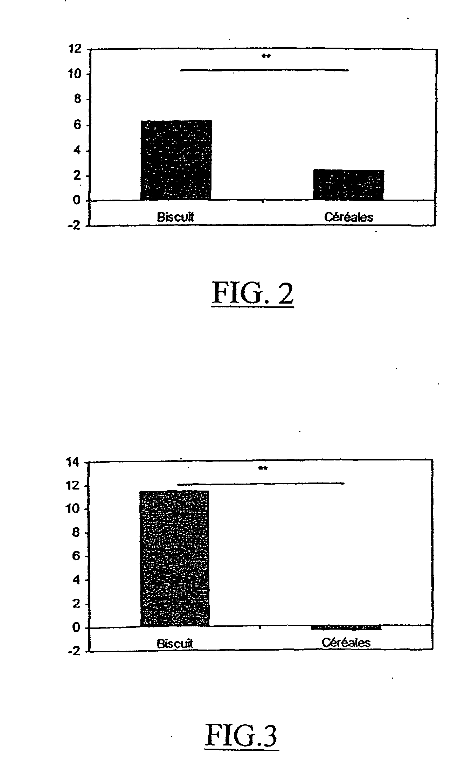

Les résultats ont été très surprenants parce que les rats ayant consommé des biscuits présentent des résultats d'apprentissage significativement supérieurs à ceux des rats ayant consommé des céréales prêtes à consommer. Les Figures 1 et 2 illustrent les différences très significatives observées entre les deux types de conditions, tant au jour 1 qu'après 3 semaines de régime (J21). La consommation de biscuit est suivie d'un apprentissage significativement supérieur à celui consécutif à la consommation de céréales.

En parallèle, les résultats obtenus pour l'activité locomotrice ont été également surprenants puisqu'une différence très significative existe entre les deux produits (Figure à 10).

Les rats ayant consommé un petit déjeuner à base de biscuits sont plus calmes, alors que les rats ayant consommé un petit déjeuner à base de céréales prêtes à consommer sont plus actifs et montrent des signes d'angoisse (plus de passages dans la case centrale, ceci traduisant une plus grande angoisse puisque le comportement de traverser en diagonale un local plutôt que de longer les murs est anormal chez le rat).

Il est apparent que seule la biodisponibilité de l'amidon permet d'expliquer ces différences de résultats

Les biscuits ont significativement plus de d'amidon lentement digestible et de glucose lentement disponible que les céréales pour petit déjeuner ce qui explique leur action positive sur le fonctionnement et le bien-être mental s'exprimant à travers les améliorations de l'apprentissage. En parallèle, les céréales pour petit déjeuner, rapidement digérées, induiraient rapidement une faim perturbatrice, augmentant l'activité et l'angoisse des animaux (en correspondance avec la recherche de nourriture), diminueraient leur attention avec pour conséquence de moindres résultats d'apprentissage. Les difficultés de couverture des besoins du cerveau en substrats après l'ingestion des céréales rapidement digérées pourraient participer au moindre apprentissage observé.

Les biscuits utilisés dans cet exemple présentent en outre un index glycémique de 48+/- 6.

### Exemple 2 : Comparaison de l'effet de deux produits céréaliers sur l'acquisition d'un apprentissage.

On teste les effets à court terme de l'ingestion de deux produits céréaliers à index glycémique équivalent et teneurs en amidon lentement digestible différentes dans un test de conditionnement d'évitement d'un stimulus lumineux aversif (TESLA) chez le rat mâle Wistar adulte.

Les produits sont d'une part des biscuits selon la présente invention à faible teneur en matière grasse et d'index glycémique 83,6, d'autre part des céréales prêtes à consommer du commerce d'index glycémique 81,6 dont les compositions sont présentées dans le tableau 4.

**Tableau 4.**

| **Composition respective des deux types de petit déjeuner** | | | | | | | | |
|---|---|---|---|---|---|---|---|---|
| **Produits** | **Analyses in vitro** | | | | | | | |
| | **Eau (w.b)** | **Sucres totaux **** | **Amidon total** | **Glucides totaux***** | **Lipides** | **Protéines** | **SDS/TS * (%)** | **Index glycémique** |
| **céréales** | 2,8 | 42,7 | 38,0 | 80,7 | 4,7 | 5-7 | 2 | 83,6 +/- 8,8 |
| **biscuit** | 3,0 | 24,5 | 53,3 | 77,8 | 5,0 | 5-7 | 29 | 81,6 +/-19,4 |

| | | | | | | | | |
|---|---|---|---|---|---|---|---|---|
| * amidon lentement digestible / amidon total . | | | | | | | | |
| ** ensemble des sucres simples (glucose, fructose; saccharose...) | | | | | | | | |
| *** = sucres totaux + amidon total | | | | | | | | |

Vingt quatre rats mâles Wistar d'un poids de 250 à 340 g sont utilisés. Les animaux sont répartis par tirage au sort en deux groupes de 12 rats. Les rats de chaque groupe sont marqués et groupés par quatre dans des cages. Les animaux sont stabulés dans une animalerie climatisée, à une température de 22 à 24 °C et soumis à un cycle lumière-obscurité de 12 heures (lumière de 23 à 11 h).

Les deux groupes de rats consomment respectivement un petit déjeuner composé de biscuits selon la présente invention et de céréales.

Les produits utilisés sont équilibrés au niveau de l'apport en glucides.

Les rats de chaque groupe sont habitués aux produits pendant 4 jours (J-3 à J0). Pour cela, des petites quantités des produits à tester sont introduites dans les mangeoires afin de familiariser chacun des groupes de rats à l'un des deux produits à tester.

Pendant une période de 11 jours (J1 à J11), les produits sont délivrés aux rats un jour sur deux au cours du petit déjeuner (J1, J3, J5, J7, J9 et J11), en alternance avec la même ration calorique à base de croquettes (J2, J4, J6, J8 et J10). Cette période permet d'habituer les rats à un rythme alimentaire mimant la période de jeûne transitoire entre le petit déjeuner et le déjeuner chez l'homme, c'est-à-dire que les animaux sont soumis à une période de jeûne post-prandial de 150 minutes après la fin du petit déjeuner. Le petit déjeuner qui débute à T0, est d'une durée maximale de 30 minutes (T30) et représente 20 % des apports énergétiques journaliers des animaux (exprimés en Kcal).

Entre le jour 1 et le jour 10, les animaux sont soumis à un jeûne de 150 minutes après la fin du petit déjeuner (T180) à l'issue duquel le complément de nourriture est délivré sous forme de croquettes pour le restant de la journée (rythme petit déjeuner). A J11, suite à la période de jeûne (T180), les rats sont soumis au test d'apprentissage d'une durée de 20 minutes.

### Dispositif expérimental :

Le dispositif expérimental consiste en une cage isolée (50 x 40 x 37 cm), fortement éclairée et comportant deux leviers : l'un actif, permettant, lorsqu'il est actionné d'obtenir 30 secondes d'obscurité suivi du retour de la lumière, alors que l'autre levier est inactif (n'entraîne pas d'obscurité). Les appuis sur le levier actif, pendant la période d'obscurité, ne procurent pas de périodes d'obscurité supplémentaires. Le rat est placé dans la cage pendant 20 minutes et le nombre d'appuis sur chaque levier est comptabilisé au cours de l'expérimentation.

La batterie de test, composée de 4 dispositifs de conditionnement, est entièrement automatisée et pilotée par ordinateur. Ainsi, aucun expérimentateur n'est présent dans la pièce pendant le test.

Ce test est réalisé au jour 11, 180 minutes après le début du petit déjeuner, pour évaluer l'effet des produits sur l'acquisition d'un apprentissage dans le dispositif TESLA pendant 20 minutes.

### Variables enregistrées :

- nombre d'appuis sur les leviers actifs (LA) et inactifs (LI),
- niveau d'efficacité des appuis [(LA/LA + LI) x 100].

Le test de Mann-Whitney a été utilisé pour comparer les performances des rats des groupes des biscuits selon la présente invention et des céréales. Le test de Wilcoxon a servi à évaluer la discrimination par comparaison des appuis actifs aux appuis inactifs de chacun des deux groupes de rats.

Les données sont exprimées en médianes et écarts interquartiles. Le seuil de risque est fixé à 5 %. Les traitements statistiques ont été réalisés à l'aide du logiciel Statview 4.1 (Abacus Concept).

### Résultats :

### 1) Effets des produite sur le nombre total d'appuis sur les deux leviers.

Les résultats obtenus sont rassemblés dans le tableau 5.

**Tableau 5.**

| **Nombre total d'appuis au cours du test (Médianes et écarts interquartiles)** | | |
|---|---|---|
| **Produits** | **Biscuit (n = 12)** | **Céréales (n =12)** |
| **Nombre total d'appuis** Médiane (Qi-Qs) | 38 (32,0 - 42,5) | 39 (20,0 - 46) |
| **Test de Mann-Whitney** | U = 69 ; N.S. | |

Les tests de Mann-Whitney ne montrent pas de différences significatives entre les rats des groupes biscuit et céréales.

### 2) Effets des produits sur la discrimination entre les deux leviers actifs et inactifs :

Les résultats obtenus sont rassemblés dans le tableau 6.

**Tableau 6.**

| **Discrimination entre les leviers actifs et inactifs au cours du test (Médianes et écarts interquartiles)** | | | | |
|---|---|---|---|---|
| **Temps Produits** | **0-5 minutes** | **0-10 minutes** | **0-15 minutes** | **0-20 minutes** |
| **Biscuit** (n = 12) | | | | |
| LA | 4.5 (2-6) | 9.5(5.5-14.5) | 16.5 (13.5-20.5) | 21.5(17.5-30.25) |
| LI | 2.5 (2-6) | 8.5 (4.5-11) | 11.5 (9-15.5) | 15 (12.5-19.5) |
| **Test de Wilcoxon** | z = 1.49 ; N.S. | z = 1.81 ; N.S. | z = 2.71; p <0.01 | z = 2.83; p< 0.005 |
| **Céréales** (n = 12) | | | | |
| LA | 4.5 (2.5-7) | 8.5 (6.5-13.5) | 11.5 (10-18) | 20 (12-24) |
| LI | 4 (2.5-7) | 10 (3.5-13) | 11.5 (6.5-17.5) | 17 (8.5-23.5) |
| **Test de Wilcoxon** | Z = 0.09 ; N.S. | Z = 1.03 ; N.S . | Z = 1.20 ; N.S. | Z = 1.61 ; N.S. |

De façon surprenante, on remarque que les rats du groupe des biscuits discriminent significativement entre le levier actif et le levier inactif à 15 et 20 minutes de test.

En revanche, les rats du groupe des céréales ne discriminent pas entre les deux leviers tout au long du test .

### 3) Effets des produits sur le taux d'efficacité des appuis sur le levier actif:

Les résultats sont rassemblés dans le tableau 7.

**Tableau 7.**

| **Taux d'efficacité des appuis au cours du test (LA/LA+LI) x 100 (Médianes et écarts interquartiles)** | | |
|---|---|---|
| **Produits** | **0-10 minutes** | **0-20 minutes** |
| **Biscuit** **(n=12)** | 61.4 (48.2 - 63.4) | 62.4 (57.9 - 64.5) |
| **Céréales** **(n=12)** | 56.3 (45.1 - 64.2) | 56.1 (52.5 - 59.6) |
| **Test de Mann-Whitney** | U = 58.5 ; N.S. | U = 39 ; p <0.06 |

Les taux d'efficacité des appuis des rats des groupes des biscuits et des céréales ne diffèrent pas significativement entre eux entre 0 et 10 minutes de test.

En revanche de façon surprenante, on constate que les rats du groupe des biscuits tendent à se montrer respectivement plus efficaces que ceux du groupe des céréales sur l'ensemble du test.

### Conclusion :

Dans la situation de conditionnement d'évitement d'un stimulus lumineux aversif, le nombre total d'appuis sur les leviers actif et inactif n'est pas significativement différent entre les rats des groupes des biscuits et des céréales.

Toutefois, les rats du groupe des biscuits discriminent significativement entre le levier actif et le levier inactif à 15 et 20 minutes de test, alors que ceux du groupe des céréales montrent des déficits à ce niveau tout au long du test.

Les différences observées entre les rats des groupes des biscuits et des céréales sont à mettre sur le compte de la qualité des glucides contenus dans leurs petits déjeuners respectifs. En effet, ces deux petits déjeuners ont un index glycémique équivalent et une faible teneur en matière grasse mais des teneurs en amidon lentement digestibles différentes. Ainsi, les bénéfices observés du fait de la consommation d'un petit déjeuner composé de biscuits selon la présente invention, c'est-à-dire les bonnes performances d'apprentissage, pourraient résulter d'un meilleur équilibre biologique et psychologique.

### Exemple 3 : Comparaison de l'effet de deux produits céréaliers sur l'acquisition d'un apprentissage faisant suite à une épreuve d'épuisement physique.

Vingt quatre rats mâles Wistar d'un poids de 360 à 450 g sont utilisés. Les rats sont marqués et répartis par groupes de quatre dans des cages. Les animaux sont stabulés dans une animalerie climatisée, à une température de 22-24 °C et sont soumis à un cycle lumière-obscurité de 12 heures.

Les produits testés sont des biscuits selon la présente invention et des céréales prêtes à consommer du commerce.

La composition nutritionnelle des deux produits est relativement comparable comme en atteste le Tableau 8 suivant :

**Tableau 8.**

| **Composition nutritionnelle des deux types de petit-déjeuner** | | |
|---|---|---|
| Produits | Biscuit | Céréales |
| Glucides (g/100g) | 63,5 | 71,5 |
| Lipides (g/100g) | 17,7 | 14,2 |
| Protéines (g/100g) | 6,5 | 6,9 |
| Apport énergétique (Kcal/100g) | 439,3 | 441,4 |

Les teneurs en Mg et Vit C, nutriments éventuellement impliqués dans le tonus de l'animal, sont également comparables.

Ces deux aliments céréaliers sont fabriqués à partir d'ingrédients similaires (farine, sucre, matière grasse...) dans des proportions similaires.

La biodisponibilité de l'amidon des deux aliments a été mesurée grâce à la méthode de Englyst. Les résultats de ces mesures, sont présentés dans le Tableau 3 de l'exemple 1.

Après une habituation d'une semaine aux conditions du laboratoire, les cages des rats sont réparties au hasard en 2 groupes : biscuit et céréales (n = 24 rats par groupe), soit six cages par groupe.

Pendant les 4 jours suivant la période d'habituation, les petites quantités des produits à tester sont introduites respectivement dans les mangeoires afin de familiariser les rats des deux groupes aux nouveaux aliments.

Les deux produits sont délivrés aux rats un jour sur deux au cours du petit déjeuner, pendant une période de 10 jours, en alternance avec la même ration calorique à base de croquettes. Les rations sont préparées puis distribuées aux animaux pour qu'elles soient isocaloriques et isoglucidiques entre les groupes de rats des biscuits et des céréales. Le petit déjeuner, d'une durée de 30 minutes, représente 20 % de la quantité de nourriture consommée quotidiennement (un rat consomme quotidiennement en moyenne 21 Kcal/100 g de poids corporel). Suite au petit déjeuner, les animaux sont soumis à un jeûne de 150 minutes, à l'issue duquel le complément de nourriture est délivré sous forme de croquettes pour le restant de la journée (rythme petit déjeuner).

### Epuisement physique des rats par la nage forcée :

Le jour du test (J10), 40 minutes avant la fin de la période de jeûne, 12 rats de chacun des deux groupes subissent un épuisement physique par nage forcée. Les rats de chacune des cages sont déposés dans quatre bassins (diamètre 30 cm, hauteur : 36 cm), remplis d'eau à un niveau de 22 cm. Après 10 minutes de nage forcée, les rats sont retirés du bassin, séchés délicatement et remis dans leur cage avant d'être testés, 30 minutes après, dans le test de conditionnement d'évitement d'un stimulus lumineux aversif.

### Test de conditionnement d'évitement d'un stimulus lumineux aversif :

Le dispositif expérimental est identique à celui utilisé dans les exemples 1 et 2.
Ce test est réalisé au jour 10, 180 minutes après le début du petit déjeuner, pour évaluer l'effet des produits et de l'épuisement sur l'acquisition d'un apprentissage dans le test de conditionnement d'évitement d'un stimulus lumineux aversif pendant 20 minutes.

Variables enregistrées : nombre d'appuis sur les leviers actif et inactif.

Analyses statistiques : L'analyse de la variance à un facteur est utilisée pour mettre en évidence une éventuelle hétérogénéité dans l'activité manipulatoire des leviers des rats des différents groupes. Le cas échéant, elle est suivie d'un test t non apparié pour comparer les groupes des rats deux à deux. Le test t apparié est utilisé pour comparer les appuis sur le levier actif et les appuis sur le levier inactif des rats de chaque groupe (étude de la discrimination). Les traitements statistiques sont réalisés à l'aide du logiciel Statview 4.1 (Abacus Concept).

### Résultat :

### 1) Effet des produits sur le nombre total d'appuis sur les deux leviers :

Les résultats sont rassemblés dans le tableau 9.

**Tableau 9.**

| **Effets des produits sur le nombre total d'appuis (Moyennes +/-E.S.M.)** | | |
|---|---|---|
| **GROUPE** | **Biscuit** **(n = 12)** | **Céréales** **(n = 12)** |
| **GROUPE 1** **(sans épuisement physique)** | 23,33 +/- 5,40 | 15,25 +/- 2,28 |
| **GROUPE 2** **(avec épuisement physique)** | 14 ,58 +/- 2,61 | 13,92 +/- 2,90 |

L'ANOVA ne montre pas d'hétérogénéité dans le nombre total d'appuis des rats des différents groupes biscuit et céréales, avec ou sans épuisement physique.

### 2) Effet des produits sur la discrimination entre les deux leviers actif et inactif :

Pour intégrer la fonction de chacun des leviers, les rats doivent avoir appuyé sur le levier actif et sur le levier inactif. Afin de bien estimer la discrimination entre levier actif et levier inactif, les rats qui n'ont pas appuyé sur l'un ou l'autre des deux leviers sont écartés de l'étude.

### a) Discrimination entre les leviers au cours des 10 premières minutes de test :

Les résultats sont rassemblés dans les tableaux 10 et 11.

**Tableau 10.**

| **Effets des produits sur la discrimination entre les leviers au cours des 10 premières minutes de test, sans épuisement physique (Moyennes +/-E.S.M.)** | | | |
|---|---|---|---|
| **GROUPE** | **LEVIER** | **Biscuit** **(n =10)** | **Céréales** **(n =10)** |
| **Sans épuisement physique** | LA | 7,90 +/- 1,97 | 6,00 +/- 0,70 |
| | LI | 5,20 +/- 1,25 | 4,50 +/- 0,58 |
| **Test t apparié** (LA vs LI) | | t = 2,49 ; p < 0,05 | t = 1,50 ; N.S. |

**Tableau 11.**

| **Effets des produits sur la discrimination entre les leviers au cours des 10 premières minutes de test, avec épuisement physique (Moyennes +/-E.S.M.)** | | | |
|---|---|---|---|
| **GROUPE** | **LEVIER** | **Biscuit** **(n = 10)** | **Céréales** **(n = 9)** |
| **Avec épuisement physique** | LA | 4,90 +/- 1,06 | 4,00 +/- 0,70 |
| | LI | 4,20 +/- 0,89 | 4,67 +/- 0,81 |
| **Test t apparié** (LA vs LI) | | t = 0 ,86 ; N.S. | t = 1,21 ; N.S. |

Pendant les 10 premières minutes de l'apprentissage, seuls les rats du groupe biscuit qui n'ont pas subi d'épuisement physique discriminent significativement entre les deux leviers.

### b) Discrimination entre les leviers au cours des 20 minutes de test :

Les résultats sont rassemblés dans les tableaux 12 et 13.

**Tableau 12.**

| **Effets des produits sur la discrimination entre les leviers au cours des 20 minutes de test, sans épuisement physique (Moyennes +/-E.S.M.)** | | | |
|---|---|---|---|
| **GROUPE** | **LEVIER** | **Biscuit** **(n=11)** | **Céréales** **(n=11)** |
| **Sans épuisement physique**. | LA | 16,73 +/- 4,09 | 9,27 +/- 1,48 |
| | LI | 8,64 +/- 1,76 | 7,36 +/- 0,86 |
| **Test t apparié** (LA vs LI) | | t = 2,62 ; p < 0,05 | t = 1,38 ; N.S. |

**Tableau 13.**

| **Effets des produits sur la discrimination entre les leviers au cours des 20 minutes de test, avec épuisement physique (Moyennes +/-E.S.M.)** | | | |
|---|---|---|---|
| **GROUPE** | **LEVIER** | **Biscuit** **(n=10)** | **Céréales** **(n = 11)** |
| **Avec épuisement physique.** | LA | 10,30 +/- 1,46 | 7,64 +/- 1,74 |
| | LI | 7,10 +/- 0,95 | 7,18 +/- 1,39 |
| **Test t apparié** (LA vs LI) | | t = 2,71 ; p < 0,05 | t = 0,51 ; N.S. |

De façon surprenante, on constate que, pendant les 20 minutes d'apprentissage, les rats du groupe biscuit avec ou sans épuisement physique discriminent significativement entre les deux leviers. Ce n'est pas le cas des rats des groupes céréales.

### Conclusion :

L'activité globale d'appuis dans le test de Conditionnement d'Évitement d'un Stimulus Lumineux Aversif est statistiquement équivalente entre les rats des groupes biscuit et céréales, qu'ils aient ou non subi l'épreuve d'épuisement physique sous forme de nage forcée.

Les rats du groupe biscuit, qui n'ont pas subi d'épuisement physique, montrent de bonnes performances d'apprentissage à la fin des 10 premières minutes de test. Ceux du groupe biscuit, ayant subi l'épreuve d'épuisement physique et ceux des deux groupes céréales, testés dans les mêmes conditions, ne montrent pas de discrimination entre les deux leviers.

A l'issue de 20 minutes de test, les rats des groupes biscuits accusent de bonnes performances dans le test d'évitement d'un stimulus lumineux aversif même après une épreuve d'épuisement physique, alors que ceux des groupes céréales montrent un déficit d'apprentissage (avec ou sans épuisement physique).

Le retard d'acquisition de la discrimination entre les leviers des rats du groupe biscuit qui ont subi l'épuisement physique serait liée à l'intensité de l'épreuve de nage forcée qui aurait épuisé une partie de leur énergie disponible.

Les différences observées entre les rats des groupes biscuits et céréales, ne peuvent être mises que sur le compte de la qualité des glucides contenus dans leurs petits déjeuners respectifs. En effet, les rats du groupe biscuit qui ont consommé plus d'amidon lentement digestible et de glucose lentement disponible lors du petit déjeuner, disposent de réserves d'énergie satisfaisantes pour résister au jeûne imposé et à l'épreuve d'épuisement physique et réaliser ainsi de bonnes performances d'apprentissage dans le test de Conditionnement d'Évitement d'un Stimulus Lumineux Aversif.

### Exemples de produits céréaliers utilisables selon l'invention

Les exemples de biscuits suivants sont donnés dans le tableau ci-après à titre indicatif.

| **Version** | **LU Petit Déjeuner® Miel Chocolat** | | **Prince petit déjeuner®** | | **LU Petit Déjeuner® Chocolat** | |
|---|---|---|---|---|---|---|
| | **g/100g de matière sèche** | **% énergie totale** | **g/100g de matière sèche** | **% énergie totale** | **g/100g de matière sèche** | **% énergi e totale** |
| **Protéines** | 7 | 6 | 6,5 | 6 | 7 | 6 |
| **Lipides** | 17 | 34 | 18 | 35 | 17 | 34 |
| **Fibres** | 4 | | 4,5 | | 6 | |
| **Glucides** | 68 | 60 | 68 | 59 | 66 | 60 |
| **Sucres** | 31 | | 27,8 | | 31 | |
| **Amidon** | 37 | | 40,2 | | 35 | |
| **Vitamines (B1, B2, PP, B6, B9, B12, B5)** | 25 % AJR | | 30 % AJR | | 25 % AJR | |
| **Calcium** | 25% AJR | | 30 % AJR | | 25% AJR | |
| **Fer** | 25% AJR | | 30 % AJR | | 25 % AJR | |
| **Magnésium** | 15 % AJR | | | | 15 % AJR | |
| **Energie** | 454 | | 460 | | 445 | |

Les compositions suivantes de biscuits sucrés utilisables selon l'invention sont données à titre indicatif.

| **Composition en % en poids par rapport à la pâte** | **Technologie de formage** | | |
|---|---|---|---|
| | **Laminé** | **Rotative** | **Coupe fil** |
| **Farines** | 52 à 64 | 40 à 63 | 28 à 40 |
| **Sucre** | 13 à 22 | 12 à 33 | 14 à 22 |
| **Sirop de glucose** | 0 à 4 | 0 à 4 | 0 à 2 |
| **Sel** | 0,2 à 1 | 0,2 à 1 | 0,2 à 0,6 |
| **Matière grasse** | 3 à 16 | 5 à 22 | 14 à 20 |
| **Eau** | 10 à 20 | 1 à 8 | 3 à 6 |
| **Agent levant** | 0,1 à 2 | 0 à 0,6 | 0,9 à 1,5 |
| **Emulsifiant** | 1,5 à 4 | 0 à 2 | 0 à 0,5 |
| **Dérivés laitiers en poudre** | 0 à 2 | 0 à 2 | 0 à 2 |
| **Oeufs poudres** | 0 à 2 | 0 à 2 | 2 à 4 |
| **Inclusions ( chocolat, nougatine, fruits )** | | 0 à 15 | 10 à 20 |
| **Poudre de cacao** | 0 à 8 | 0 à 8 | 0 à 30 |
| **Biscuits broyés recyclés** | 0 à 5 | 0 à 10 | 0 à 5 |

Lcs compositions suivantes de crackers utilisables selon l'invention sont données à titre indicatif et non limitatif.

| **% en poids par rapport à la pâte** | **Cracker enzymatique ou chimique** | **Cracker fermenté** |
|---|---|---|
| **Farine** | 50 à 0 | 65 à 75 |
| **Sucre** | 0 à 10 | 0 à 0,2 |
| **Sirop de glucose** | 0 5 | 0 à 2 |
| **Sel** | 0,1 à 2 | 0,5à2 |
| **Matière grasse** | 5 à 15 | 5 à 12 |
| **Eau** | 10 à 20 | 13 à 20 |
| **Agent levant ou enzyme** | 0,5 à 2 | 0,1 à 0,2 |
| **Levure biologique** | 0 | 0 à 0,5 |
| **Dérivés laitiers poudres** | 0 à 4 | 0 à 5 |
| **Malt** | 0 à 5 | 0 à 8 |
| **Biscuits broyés** | 0 à 5 | 0 à 5 |

Ces pâtes de crackers sont ensuite cuites, puis pulvérisées de matière grasse et de matière aromatisante (0 à 20%).

## Revendications

1. Utilisation d'un produit céréalier ayant :
- une teneur en amidon lentement digestible par rapport à la teneur totale en amidon supérieure à environ 12% en poids, de préférence supérieure à environ 20%, et ;
- une teneur en lipides comprise entre 3 et 25 g pour 100 g de matière sèche, pour améliorer, à des fins non thérapeutiques, la mémorisation, l'attention, la concentration et la vigilance chez l'homme et en particulier chez l'enfant et l'adolescent.

2. Utilisation selon la revendication 1, **caractérisée en ce que** la teneur en glucose lentement disponible par rapport à la teneur totale en glucides du produit céréalier est supérieure à environ 10%, de préférence supérieure à environ 15%.

3. Utilisation selon la revendication 1 ou 2, **caractérisée en ce que** la teneur du produit céréalier en sucre est de 2 à 40 g pour 100 g de matière sèche.

4. Utilisation selon la revendication 3, **caractérisée en ce que** le sucre est un monosaccharide et/ou disaccharide, de préférence du glucose, du saccharose, du fructose et/ou du maltose.

5. Utilisation selon l'une des revendications précédentes, **caractérisée en ce que** la teneur en lipides du produit céréalier est de 10 à 20 g pour 100 g de matière sèche.

6. Utilisation selon la revendication 5, **caractérisée en ce que** la teneur en lipides du produit céréalier est de 14 à 20 g pour 100 g de matière sèche.

7. Utilisation selon l'une des revendications précédentes, **caractérisée en ce que** la teneur en amidon du produit céréalier est de 30 à 70 g pour 100 g de matière sèche, de préférence de 34 à 60 g pour 100 g.

8. Utilisation selon l'une des revendications précédentes, **caractérisée en ce que** la teneur en protéines du produit céréalier est de 5 à 11 g pour 100 g de matière sèche.

9. Utilisation selon l'une des revendications précédentes, **caractérisée en ce que** la teneur en glucides du produit céréalier est de 60 à 90 g pour 100 g de matière sèche.

10. Utilisation selon l'une des revendications précédentes, **caractérisée en ce que** le produit céréalier est consommé au petit déjeuner.

11. Utilisation selon l'une des revendications précédentes, **caractérisée en ce que** le produit céréalier est du type biscuit ou cracker.

## Patentansprüche

1. Verwendung eines Getreideprodukts mit:
- einem Gehalt an langsam verdaulicher Stärke, bezogen auf den Gesamtgehalt an Stärke, von mehr als etwa 12 Gew.-%, vorzugsweise mehr als etwa 20 Gew.-%, und
- einem Gehalt an Lipiden zwischen 3 und 25 g einschließlich pro 100 g Trockensubstanz,
um für nicht therapeutische Zwecke das Gedächtnis, die Aufmerksamkeit, die Konzentration und die Wachsamkeit beim Menschen, insbesondere beim Kind und Heranwachsenden, zu verbessern.

2. Verwendung nach Anspruch 1, **dadurch gekennzeichnet, dass** der Gehalt an langsam verfügbarer Glucose, bezogen auf den Gesamtgehalt an Kohlehydraten, des Getreideprodukts über etwa 10 %, vorzugsweise über etwa 15 % liegt.

3. Verwendung nach Anspruch 1 oder 2, **dadurch gekennzeichnet, dass** der Gehalt des Getreideprodukts an Zucker 2 bis 40 g pro 100 g Trockensubstanz beträgt.

4. Verwendung nach Anspruch 3, **dadurch gekennzeichnet, dass** der Zucker ein Monosaccharid und/oder Disaccharid, vorzugsweise Glucose, Saccharose, Fructose und/oder Maltose ist.

5. Verwendung nach einem der vorangehenden Ansprüche, **dadurch gekennzeichnet, dass** der Gehalt des Getreideprodukts an Lipiden 10 bis 20 g pro 100 g Trockensubstanz beträgt.

6. Verwendung nach Anspruch 5, **dadurch gekennzeichnet, dass** der Gehalt des Getreideprodukts an Lipiden 14 bis 20 g pro 100 g Trockensubstanz beträgt.

7. Verwendung nach einem der vorangehenden Ansprüche, **dadurch gekennzeichnet, dass** der Gehalt des Getreideprodukts an Stärke 30 bis 70 g pro 100 g Trockensubstanz, vorzugsweise 34 bis 60 g pro 100 g, beträgt.

8. Verwendung nach einem der vorangehenden Ansprüche, **dadurch gekennzeichnet, dass** der Gehalt des Getreideprodukts an Proteinen 5 bis 11 g pro 100 g Trockensubstanz beträgt.

9. Verwendung nach einem der vorangehenden Ansprüche, **dadurch gekennzeichnet dass** der Gehalt des Getreideprodukts an Kohlehydraten 60 bis 90 g pro 100 g Trockensubstanz beträgt.

10. Verwendung nach einem der vorangehenden Ansprüche, **dadurch gekennzeichnet, dass** das Getreideprodukt beim Frühstück eingenommen wird.

11. Verwendung nach einem der vorangehenden Ansprüche, **dadurch gekennzeichnet, daß** das Getreideprodukt von der Art eines Kekses oder Crackers ist.

## Claims

1. Use of a cereal product having:
- a slowly digestible starch content relative to the total starch content greater than about 12% by weight, preferably greater than about 20%, and
- a lipid content of between 3 and 25 g per 100 g of dry matter,
to improve, for non-therapeutic purposes, the memorization, attention, concentration and vigilance in a person, and particularly in a child and an adolescent.

2. Use according to Claim 1, **characterized in that** the slowly available glucose content relative to the total carbohydrate content of the cereal product is greater than about 10%, preferably greater than about 15%.

3. Use according to Claim 1 or 2, **characterized in that** the sugar content of the cereal product is from 2 to 40 g per 100 g of dry matter.

4. Use according to Claim 3, **characterized in that** the sugar is a monosaccharide and/or disaccharide, preferably glucose, sucrose, fructose and/or maltose.

5. Use according to one of the preceding claims, **characterized in that** the lipid content of the cereal product is from 10 to 20 g per 100 g of dry matter.

6. Use according to Claim 5, **characterized in that** the lipid content of the cereal product is from 14 to 20 g per 100 g of dry matter.

7. Use according to one of the preceding claims, **characterized in that** the starch content of the cereal product is from 30 to 70 g per 100 g of dry matter, preferably from 34 to 60 g per 100 g.

8. Use according to one of the preceding claims, **characterized in that** the protein content of the cereal product is from 5 to 11 g per 100 g of dry matter.

9. Use according to one of the preceding claims, **characterized in that** the carbohydrate content of the cereal product is from 60 to 90 g per 100 g of dry matter.

10. Use according to one of the preceding claims, **characterized in that** the cereal product is consumed at breakfast.

11. Use according to one of the preceding claims, **characterized in that** the cereal product is of the biscuit or cracker type.
